# FASCICULE DE BREVET EUROPEEN

(11) **EP 2 512 836 B1**
(45) Date de publication et mention de la délivrance du brevet: **21.02.2018**
(21) Numéro de dépôt: 10788087.4
(22) Date de dépôt: 14.12.2010
(51) Int. Cl.: B60C 19/12, B60C 17/10, B29C 73/20, B29D 30/06, B29C 47/00, B29C 47/36, B29C 47/60, B29C 47/64, B29C 47/66, B29L 30/00, B29C 73/16, B29C 73/18, B29D 30/30

(54) **BANDAGE PNEUMATIQUE AVEC COUCHE AUTO-OBTURANTE INTEGREE**
REIFEN MIT INTEGRIERTER SELBSTVERSCHLIESSENDER SCHICHT
TIRE HAVING A BUILT-IN SELF-SEALING LAYER

(30) Priorité: 14.12.2009 FR 0958911
(43) Date de publication de la demande: 24.10.2012
(73) Titulaire: Compagnie Générale des Etablissements Michelin, 63000 Clermont-Ferrand (FR)
(72) Inventeur: MERINO LOPEZ, Jose, F-63200 Riom (FR); VOGE, Bozena, F-63800 Cournon d'Auvergne (FR); AHOUANTO, Michel, F-63530 Enval (FR)
(74) Mandataire: Dequire, Philippe Jean-Marie Denis
(86) Numéro de dépôt international: PCT/EP2010/069589
(87) Numéro de publication internationale: WO 2011/073171

(56) Documents cités:
- EP-A1- 1 034 916
- FR-A1- 2 429 682
- FR-A1- 2 910 478
- FR-A2- 2 208 796

## Description

### Domaine de l'invention

La présente invention concerne les bandages pneumatiques comportant une couche auto-obturante (« *self sealing* ») disposée sur leur paroi intérieure pour obturer d'éventuelles perforations en service et plus particulièrement de tels bandages pneumatiques dans lesquels la couche auto-obturante est placée dans l'ébauche du bandage pneumatique avant sa vulcanisation.

### Arrière plan technologique

De nombreux documents présentent de tels bandages pneumatiques comportant une couche auto-obturante sur tout ou partie de leur surface intérieure.

A titre d'exemple, le document US 4,418,093 présente un procédé pour disposer de façon régulière une couche de matériau auto-obturant sur la paroi intérieure d'un bandage pneumatique vulcanisé par combinaison d'une mise en rotation du bandage pneumatique suivie de mouvements d'oscillations jusqu'à ce que le matériau auto-obturant soit suffisamment réticulé pour ne plus fluer.

Lorsque la couche auto-obturante est disposée dans l'ébauche à cru d'un bandage pneumatique, l'un des problèmes rencontrés est dû à la nature très collante de la couche auto-obturante qui adhère fortement à la membrane de cuisson pendant la phase de vulcanisation. Après la sortie du bandage pneumatique vulcanisé du moule de cuisson, des parties de la couche auto-obturante peuvent rester collées sur la paroi de la membrane et entraîner sa mise au rebut rapide. Pendant cette phase de vulcanisation à haute température, des constituants de la couche auto-obturante peuvent aussi migrer dans la membrane de cuisson ce qui peut également en diminuer la durée de vie. Les agents anti-collants usuellement utilisés tels que les badigeons ou les liquides siliconés sont tout à fait insuffisants pour résoudre ce problème.

Pour résoudre ce problème, le document US 4,664,168 divulgue un bandage pneumatique avec couche auto-obturante incorporée lors de la fabrication du pneumatique. Ce bandage pneumatique comporte une bande de roulement caoutchouteuse extérieure, un renfort de carcasse, une couche étanche aux gaz disposée intérieurement relativement au renfort de carcasse et une couche anti-collante disposée le plus intérieurement. Il comporte aussi une couche auto-obturante adjacente à la couche anti-collante et disposée intérieurement relativement à la couche étanche aux gaz. La couche anti-collante est constituée par une poudre telle que du talc ou du stéarate de zinc. Les documents FR 2429682 et FR 2208796 décrivent des bandages pneumatiques avec des couches anti-collantes comportant des particules de graphite ou des fibres de cellulose.

La couche anti-collante facilite la fabrication du bandage pneumatique en limitant les contacts directs entre la couche auto-obturante et les outils d'assemblage de l'ébauche du bandage pneumatique. Toutefois, lors de la vulcanisation d'une ébauche de bandage pneumatique dans un moule avec membrane de cuisson, l'extension de l'ébauche du bandage pneumatique par la poussée de la membrane de cuisson provoque l'éloignement des particules les unes des autres et la possibilité pour le produit auto-obturant de venir en contact direct avec la membrane de cuisson.

### Description de l'invention

L'invention a pour objet un bandage pneumatique similaire à celui précédemment décrit dans lequel la couche anti-collante est constituée de particules de facteur de forme F=L/E supérieur à 5, (L représentant la longueur ou plus grande dimension et E la plus petite dimension normale à la longueur ; E et L étant des moyennes en nombre).

L'utilisation de particules de facteur de forme élevé permet de conserver une bonne efficacité de la couche anti-collante, notamment pendant la vulcanisation de l'ébauche du bandage pneumatique dans un moule avec membrane de cuisson.

Cette efficacité est nettement supérieure à celle que donnerait une couche constituée de particules de facteur de forme inférieur, telles des sphères. En cas d'extension, chaque particule s'écarte de ses voisines en laissant libre des passages pour un contact direct néfaste entre la membrane de cuisson ou la surface du tambour de fabrication et la couche auto-obturante.

Le mode le plus avantageux est la disposition de la couche juste en surface, sans aucun lien entre les particules, qui adhèrent au produit auto-obturant grâce au collant intrinsèque de celui-ci.

Il est avantageux d'appliquer aussi une solution anti-collante traditionnelle (badigeon : suspension de poudre ou solution anti-collante, typiquement incluant silicone ou PDMS). Cela est nécessaire dans les zones de la surface interne du pneu non recouvertes de produit auto-obturant et fait un complément anti-collant dans les zones ayant le dépôt de fibres ou particules de facteur de forme élevé.

Selon un mode de réalisation avantageux, la couche anti-collante est constituée de particules noyées dans une matrice.

Cette matrice peut être identique au matériau de la couche auto-obturante.

Selon un premier mode de réalisation, les particules sont des fibres courtes de diamètre compris entre 10 et 200 µm et de longueur comprise entre 1 et 5 mm.

De telle fibres sont avantageusement choisies dans le groupe constitué par les fibres de coton, les fibres d'aramide, les fibres de verre et leurs mélanges.

Selon un second mode de réalisation, les particules sont des charges lamellaires.

Ces charges lamellaires sont avantageusement choisies dans le groupe constitué par les graphites, les phyllosilicates et les mélanges de telles charges.

On choisit avantageusement les graphites, les micas et les talcs et leurs mélanges.

L'épaisseur de la couche anti-collante est avantageusement inférieure à 500 µm, et très avantageusement inférieure à 100 µm. Elle peut être comprise entre 30 et 50 micromètres.

De tels couches anti-collantes constituées de particules ou de fibres peuvent aussi être utilisés en les appliquant lors de la seconde phase de fabrication du bandage, la phase de finition juste avant la vulcanisation.

Comme décrit précédemment, de tels couches anti-collantes constituées de particules ou de fibres permettent de réaliser la confection du bandage pneumatique en supprimant pratiquement tous les problèmes liés au collant intrinsèquement très fort des couches auto-obturantes. La couche anti-collante sert de séparation entre la couche auto-obturante d'une part et le tambour d'assemblage puis le tambour de finition et la membrane de cuisson d'autre part.

Selon un mode de réalisation de l'invention, la couche auto-obturante peut comporter au moins (pce signifiant parties en poids pour cent parties d'élastomère solide) un élastomère thermoplastique styrénique (dit « TPS ») et plus de 200 pce d'une huile d'extension dudit élastomère.

Le TPS peut être l'élastomère majoritaire de la couche auto-obturante.

L'élastomère TPS peut être choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Avantageusement, l'élastomère TPS est choisi dans le groupe constitué par les copolymères SEBS, les copolymères SEPS et les mélanges de ces copolymères.

Selon un autre mode de réalisation, la couche auto-obturante peut comporter au moins :
- à titre d'élastomère majoritaire, un élastomère diénique insaturé ;
- entre 30 et 90 pce d'une résine hydrocarbonée ;
- un plastifiant liquide dont la Tg (température de transition vitreuse) est inférieure à -20°C, à un taux pondéral compris entre 0 et 60 pce ; et
- de 0 à moins de 30 pce d'une charge.

L'élastomère diénique insaturé est avantageusement choisi dans le groupe constitué par les polybutadiènes, le caoutchouc naturel, les polyisoprènes de synthèse, les copolymères de butadiène, les copolymères d'isoprène et les mélanges de tels élastomères.

L'élastomère diénique insaturé peut avantageusement être un élastomère isoprénique, de préférence choisi dans le groupe constitué par le caoutchouc naturel, les polyisoprènes de synthèse et les mélanges de tels élastomères.

Avantageusement, le taux d'élastomère diénique insaturé est supérieur à 50 pce, de préférence supérieur à 70 pce.

### Description brève des dessins

Tous les détails de réalisation sont donnés dans la description qui suit, complétée par les figures 1 à 3, dans lesquelles :
- la figure 1 représente de manière très schématique (sans respect d'une échelle spécifique), une coupe radiale d'un bandage pneumatique conforme à un mode de réalisation de l'invention ;
- la figure 2 présente en coupe radiale partielle une ébauche de pneumatique conforme à un mode de réalisation de l'invention ; et
- la figure 3 présente un schéma d'extrudeuse-mélangeur à vis.

### Description détaillée de modes de réalisation de l'invention

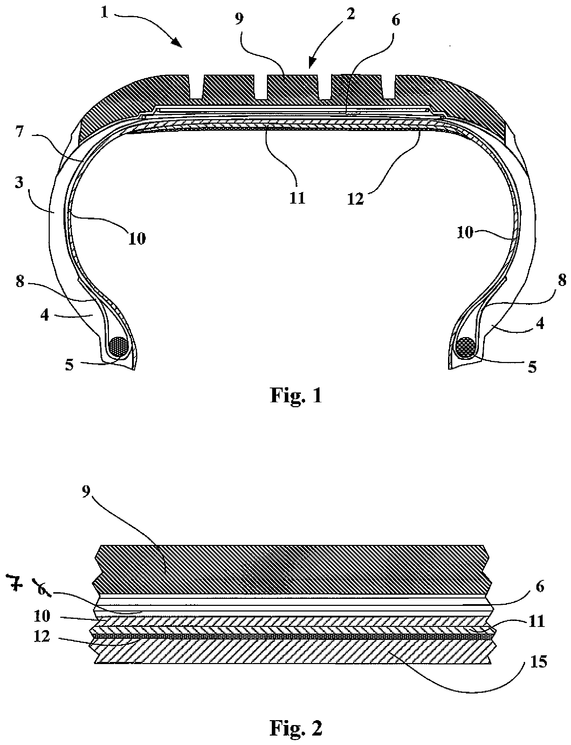

La figure 1 représente de manière schématique une coupe radiale d'un bandage pneumatique ou pneumatique incorporant une couche auto-obturante avec une couche anti-collante selon un mode de réalisation de l'invention.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. L'armature de sommet 6 est surmontée radialement extérieurement d'une bande de roulement caoutchouteuse 9. Une armature de carcasse 7 est enroulée autour des deux tringles 5 dans chaque bourrelet 4, le retournement 8 de cette armature 7 étant par exemple disposé vers l'extérieur du pneumatique 1. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6). Une couche étanche 10 s'étend d'un bourrelet à l'autre radialement intérieurement relativement à l'armature de carcasse 7.

Le pneumatique 1 est tel que sa paroi interne comporte une couche auto-obturante 11. Conformément à un mode de réalisation préférentiel de l'invention, la couche auto-obturante 11 recouvre la couche étanche 10 dans la zone du sommet 2 du bandage pneumatique. La couche auto-obturante peut aussi se prolonger de la zone sommet jusqu'à mi-flancs (équateurs) du bandage pneumatique, voire au-delà. La couche auto-obturante 11 est recouverte radialement intérieurement par une couche anti-collante 12.

La couche anti-collante 12 comporte des particules de facteur de forme supérieur à 5 disposées en couche mince.

La couche anti-collante 12 permet d'éviter à la couche auto-obturante pratiquement tout contact avec le tambour de fabrication du bandage pneumatique puis avec la membrane de cuisson du moule de vulcanisation.

Selon un premier mode de réalisation, on peut utiliser comme particules anti-collantes des fibres courtes.

De préférence, ces fibres ont un diamètre compris entre 10 et 200 microns et de longueur comprise entre 1 et 5 mm.

Les fibres utilisées peuvent être d'origine naturelle, végétale (coton) ou minérales (fibre de verre), ou encore synthétiques (aramides).

Leur facteur de forme leur donne un bon pouvoir couvrant même après l'extension de la paroi de l'ébauche du bandage pneumatique liée à la conformation.

Selon un second mode de réalisation non exclusif du premier, on peut utiliser comme particules anti-collantes des charges lamellaires.

Les charges dites lamellaires (en anglais "*platy fillers*") sont bien connues de l'homme du métier. Elles ont été utilisées notamment dans des bandages pneumatiques pour réduire la perméabilité des couches étanches aux gaz conventionnelles à base de caoutchouc butyl.

Elles se présentent généralement sous forme de plaques, plaquettes, feuilles ou feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 µm (c'est-à-dire qu'il s'agit alors de charges lamellaires dites micrométriques), typiquement comprise entre quelques µm (par exemple 5 µm) et quelques centaines de µm (par exemple 500 voire 800 µm).

Les charges lamellaires utilisées conformément à un objet de l'invention ont un facteur de forme supérieur à 5. Ce facteur de forme élevé ajouté à la forme de plaques ou feuilles ou feuillets de ces charges leur permet de conserver un excellent pouvoir couvrant et donc protecteur après la conformation de l'ébauche du bandage pneumatique.

Préférentiellement, les charges lamellaires utilisées conformément à un objet de l'invention sont choisies dans le groupe constitué par les graphites, les phyllosilicates et les mélanges de telles charges. Parmi les phyllosilicates, on citera notamment les argiles, talcs, micas, kaolins, ces phyllosilicates pouvant être modifiés ou non par exemple par un traitement de surface ; à titre d'exemples de tels phyllosilicates modifiés, on peut citer notamment des micas recouverts d'oxyde de titane, des argiles modifiées par des tensioactifs (*"organo clays*")*.*

On utilise préférentiellement des charges lamellaires à faible énergie de surface, c'est-à-dire relativement apolaires, telles que celles choisies dans le groupe constitué par les graphites, les talcs, les micas et les mélanges de telles charges, ces dernières pouvant être modifiées ou non, plus préférentiellement encore dans le groupe constitué par les graphites, les talcs et les mélanges de telles charges. Parmi les graphites peuvent être cités notamment les graphites naturels, les graphites expansés ou les graphites synthétiques.

Comme exemples de micas, on peut citer les micas commercialisés par la société CMMP (Mica-MU®, Mica-Soft®, Briomica® par exemple), ceux commercialisés par la société YAMAGUCHI (A51S, A41S, SYA-21R, SYA-21RS, A21S, SYA-41R), les vermiculites (notamment la vermiculite Shawatec® commercialisée par CMMP ou la vermiculite Microlite® commercialisée par W.R. Grace), les micas modifiés ou traités (par exemple, la gamme Iriodin® commercialisée par Merck). Comme exemples de graphites, on peut citer les graphites commercialisés par la société Timcal (gamme Timrex®). Comme exemple de talcs, on peut citer les talcs commercialisés par la société Luzenac.

La couche anti-collante peut être appliquée sur la couche auto-obturante par projection aérienne ou avec un badigeon d'eau ou d'un solvant.

Une autre solution consiste à noyer les fibres ou charges lamellaires dans une matrice et de disposer une couche mince de cette matrice comportant les fibres ou charges lamellaires, d'épaisseur inférieure à 500 microns directement sur la couche auto obturante pour constituer un stratifié ou sur le tambour de fabrication comme première étape de l'assemblage du bandage pneumatique.

Cette matrice peut être une huile telle une huile de polyisobutylène (« PIB »). On peut réaliser un stratifié couche auto-obturante, couche anti-collante en appliquant sur la surface de la couche auto-obturante une couche mince de fibres ou charges lamellaires puis en déposant une couche mince elle aussi d'huile PIB à la surface des particules.

Selon un mode de réalisation alternatif, on peut noyer les particules dans un matériau identique à celui de la couche auto-obturante. Les particules sont alors incorporées dans ce matériau lors du procédé de préparation de cette couche auto-obturante et on applique sur la couche auto-obturante une couche mince d'épaisseur inférieure à 500 microns et pouvant aller jusqu'à 30 à 50 microns du matériau auto-obturant comportant les particules de facteur de forme supérieur à 5. La présence de ces particules réduit de façon très notable le caractère collant ou « tack » de la couche auto-obturante et permet ainsi de réaliser l'assemblage de l'ébauche du bandage pneumatique de façon usuelle.

Selon un mode de réalisation, la couche auto-obturante 11 comporte un élastomère thermoplastique styrénique (dit « TPS ») et plus de 200 pce d'une huile d'extension de l'élastomère. Les élastomères thermoplastiques styréniques sont des élastomères thermoplastiques se présentant sous la forme de copolymères blocs à base de styrène.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés.

L'élastomère TPS est choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Plus préférentiellement, l'élastomère est choisi dans le groupe constitué par les copolymères SEBS, les copolymères SEPS et les mélanges de ces copolymères.

L'élastomère TPS peut constituer la totalité de la matrice élastomère ou la majorité pondérale (de préférence pour plus de 50 %, plus préférentiellement pour plus de 70%) de cette dernière lorsqu'elle comporte un ou plusieurs autre(s) élastomère(s), thermoplastiques ou non, par exemple du type diéniques.

Des exemples de telles couches auto-obturantes et de leurs propriétés sont divulgués dans les documents FR 2 910 382, FR 2 910 478 et FR 2 925 388.

Une telle couche auto-obturante peut être préformée par extrusion d'un profilé plat aux dimensions appropriées pour son application sur un tambour de fabrication. Un exemple de réalisation est présenté dans le document FR 2 925 388.

Selon un autre exemple de réalisation, la couche auto-obturante 11 est constituée d'une composition élastomère comportant au moins, à titre d'élastomère majoritaire (préférentiellement pour plus de 50 pce), un élastomère diénique insaturé, entre 30 et 90 pce d'une résine hydrocarbonée et un plastifiant liquide de Tg inférieure à -20°C, à un taux compris entre 0 et 60 pce (pce signifiant parties en poids pour cent parties d'élastomère solide). Elle a pour autre caractéristique essentielle d'être dépourvue de charge ou, tout au plus, d'en comporter moins de 30 pce.

Par élastomère ou caoutchouc "diénique", on rappelle que doit être compris, de manière connue, un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories, saturés ou insaturés. On entend dans la présente demande par élastomère diénique "insaturé" (ou "essentiellement insaturé") un élastomère diénique issu au moins en partie de monomères diènes conjugués et ayant un taux de motifs ou unités issus de diènes conjugués qui est supérieur à 30% (% en moles) ; c'est ainsi que sont exclus de cette définition des élastomères diéniques tels que les caoutchoucs butyl ou les copolymères de diènes et d'alpha-oléfines type EPDM qui peuvent être qualifiés d'élastomères diéniques "saturés" ou "essentiellement saturés" en raison de leur taux réduit de motifs d'origine diénique (toujours inférieur à 15% en moles).

On utilise préférentiellement un élastomère diénique insaturé dont le taux (% en moles) de motifs d'origine diénique (diènes conjugués) est supérieur à 50%, un tel élastomère diénique étant plus préférentiellement choisi dans le groupe constitué par les polybutadiènes (BR), le caoutchouc naturel (NR), les polyisoprènes de synthèse (IR), les copolymères de butadiènes (par exemple de butadiène-styrène ou SBR), les copolymères d'isoprène (bien entendu, autres que caoutchouc butyl) et les mélanges de tels élastomères.

Par opposition à des élastomères diéniques du type liquide, l'élastomère diénique insaturé de la composition est par définition solide. De préférence, sa masse moléculaire moyenne en nombre (Mn) est comprise entre 100 000 et 5 000 000, plus préférentiellement entre 200 000 et 4 000 000 g/mol. La valeur Mn est déterminée de manière connue, par exemple par SEC : solvant tétrahydrofurane ; température 35°C; concentration 1 g/l ; débit 1 ml/min ; solution filtrée sur filtre de porosité 0,45 µm avant injection ; étalonnage de Moore avec des étalons (polyisoprène) ; jeu de 4 colonnes "WATERS" en série ("STYRAGEL" HMW7, HMW6E, et 2 HT6E) ; détection par réfractomètre différentiel ("WATERS 2410") et son logiciel d'exploitation associé ("WATERS EMPOWER").

Plus préférentiellement, l'élastomère diénique insaturé de la composition de la couche auto-obturante est un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les copolymères de butadiène-isoprène (BIR), les copolymères de styrène-isoprène (SIR), les copolymères de styrène-butadiène-isoprène (SBIR) et les mélanges de ces élastomères.

Cet élastomère isoprénique est de préférence du caoutchouc naturel ou un polyisoprène cis-1,4 de synthèse; parmi ces polyisoprènes de synthèse, sont utilisés préférentiellement des polyisoprènes ayant un taux (% molaire) de liaisons cis-1,4 supérieur à 90%, plus préférentiellement encore supérieur à 95%, notamment supérieur à 98%.

L'élastomère diénique insaturé ci-dessus, notamment élastomère isoprénique tel que caoutchouc naturel, peut constituer la totalité de la matrice élastomère ou la majorité pondérale (de préférence pour plus de 50%, plus préférentiellement pour plus de 70%) de cette dernière lorsqu'elle comporte un ou plusieurs autre(s) élastomère(s), diéniques ou non diéniques, par exemple du type thermoplastiques. En d'autres termes et de préférence, dans la composition, le taux d'élastomère diénique insaturé (solide), notamment d'élastomère isoprénique tel que caoutchouc naturel, est supérieur à 50 pce, plus préférentiellement supérieur à 70 pce. Plus préférentiellement encore, ce taux d'élastomère diénique insaturé, notamment d'élastomère isoprénique tel que caoutchouc naturel, est supérieur à 80 pce.

Selon un mode de réalisation particulier, l'élastomère diénique insaturé ci-dessus, notamment lorsqu'il s'agit d'un élastomère diénique isoprénique tel que du caoutchouc naturel, est le seul élastomère présent dans la composition auto-obturante. Mais il pourrait aussi, selon d'autres modes de réalisation possibles, être associé à d'autres élastomères (solides) minoritaires en poids, qu'il s'agisse d'élastomères diéniques insaturés (par exemple BR ou SBR) voire saturés (par exemple butyl), ou encore d'élastomères autres que diéniques, par exemple des élastomères thermoplastiques styréniques (TPS), par exemple choisis dans le groupe constitué par les copolymères blocs styrène/ butadiène/ styrène (SBS), styrène/ isoprène/ styrène (SIS), styrène/ butadiène/ isoprène/ styrène (SBIS), styrène/ isobutylène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

De manière surprenante, cet élastomère diénique insaturé, non chargé (ou très faiblement chargé), s'est révélé capable, après ajout d'une résine hydrocarbonée thermoplastique dans le domaine étroit préconisé, de remplir la fonction d'une composition auto-obturante performante, comme cela est expliqué en détail dans la suite de l'exposé.

Le deuxième constituant essentiel de la composition auto-obturante est une résine hydrocarbonée.

La dénomination "résine" est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods*")*.* Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

Leur température de transition vitreuse (Tg) est préférentiellement supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, "*softening point*"), température à laquelle le produit, par exemple sous forme de poudre, s'agglutine ; cette donnée tend à remplacer le point de fusion, assez mal défini, des résines en général. La température de ramollissement d'une résine hydrocarbonée est généralement supérieure d'environ 50 à 60°C à la valeur de Tg.

Dans la composition de la couche auto-obturante, la température de ramollissement de la résine est préférentiellement supérieure à 40°C (en particulier comprise entre 40°C et 140°C), plus préférentiellement supérieure à 50°C (en particulier comprise entre 50°C et 135°C).

Ladite résine est utilisée à un taux pondéral compris entre 30 et 90 pce. En dessous de 30 pce, la performance anti-crevaison s'est avérée insuffisante en raison d'une rigidité trop importante de la composition, alors qu'au-delà de 90 pce, on s'expose à une tenue mécanique insuffisante du matériau avec en outre un risque de performance dégradée à haute température (typiquement supérieure à 60°C). Pour ces raisons, le taux de résine est préférentiellement compris entre 40 et 80 pce, plus préférentiellement encore au moins égal à 45 pce, notamment compris dans un domaine de 45 à 75 pce.

Selon un mode de réalisation préférentiel de la couche auto-obturante, la résine hydrocarbonée présente au moins une (quelconque), plus préférentiellement l'ensemble des caractéristiques suivantes :
- une Tg supérieure à 25°C ;
- un point de ramollissement supérieur à 50°C (en particulier compris entre 50°C et 135°C) ;
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine hydrocarbonée présente au moins une (quelconque), plus préférentiellement l'ensemble des caractéristiques suivantes :
- une Tg comprise entre 25°C et 100°C (notamment entre 30°C et 90°C) ;
- un point de ramollissement supérieur à 60°C, en particulier compris entre 60°C et 135°C ;
- une masse moyenne Mn comprise entre 500 et 1500 g/mol ;
- un indice de polymolécularité Ip inférieur à 2.

La Tg est mesurée selon la norme ASTM D3418 (1999). Le point de ramollissement est mesuré selon la norme ISO 4625 (méthode "Ring and Ball"). La macrostructure (Mw, Mn et Ip) est déterminée par chromatographie d'exclusion stérique (SEC): solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5 et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac" ou par Kolon sous dénomination "Hikorez" pour ce qui concerne les résines coupe C₅/ styrène ou résines coupe C₅/ coupe C₉, ou encore par la société Struktol sous dénomination "40 MS" ou "40 NS" ou par la société Exxon Mobil sous dénomination "Escorez" (mélanges de résines aromatiques et/ou aliphatiques).

La composition auto-obturante a pour caractéristique essentielle de comporter en outre, à un taux inférieur à 60 pce (en d'autres termes entre 0 et 60 pce), un agent plastifiant liquide (à 23°C) dit "à basse Tg" dont la fonction est notamment de ramollir la matrice en diluant l'élastomère diénique et la résine hydrocarbonée, améliorant en particulier les performances d'auto-obturation "à froid" (c'est-à-dire typiquement pour une température inférieure à 0°C) ; sa Tg est par définition inférieure à -20°C, elle est de préférence inférieure à -40°C.

Tout élastomère liquide, toute huile d'extension, qu'elle soit de nature aromatique ou non-aromatique, plus généralement tout agent plastifiant liquide connu pour ses propriétés plastifiantes vis-à-vis d'élastomères, notamment diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment à des résines hydrocarbonées qui sont par nature solides à température ambiante.

Conviennent notamment des élastomères liquides à faible masse moléculaire moyenne en nombre (Mn), typiquement comprise entre 300 et 90 000, plus généralement entre 400 et 50 000, par exemple sous la forme de caoutchouc naturel dépolymérisé, de BR, SBR ou IR liquides, tels que décrits par exemple dans les documents brevet US 4 913 209, US 5 085 942 et US 5 295 525. Peuvent être également utilisés des mélanges de tels élastomères liquides avec des huiles telles que décrites ci-après.

Conviennent également des huiles d'extension, notamment celles choisies dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité, hydrogénées ou non), les huiles aromatiques ou DAE (*Distillate Aromatic Extracts*), les huiles MES (*Medium Extracted Solvates*), les huiles TDAE (*Treated Distillate Aromatic Extracts*), les huiles minérales, les huiles végétales (et leurs oligomères, e.g. huiles de colza, soja, tournesol) et les mélanges de ces huiles.

Selon un mode de réalisation particulier, on utilise par exemple une huile du type polybutène, en particulier une huile polyisobutylène (en abrégé "PIB"), qui a démontré un excellent compromis de propriétés comparativement aux autres huiles testées, notamment à une huile conventionnelle du type paraffinique. A titre d'exemples, des huiles PIB sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12"); des huiles paraffiniques sont commercialisées par exemple par EXXON sous la dénomination "Telura 618" ou par Repsol sous la dénomination "Extensol 51".

Conviennent également, à titre de plastifiants liquides, des plastifiants éthers, esters, phosphates, sulfonates, plus particulièrement ceux choisis parmi esters et phosphates. A titre de plastifiants phosphates préférentiels, on peut citer ceux qui contiennent entre 12 et 30 atomes de carbone, par exemple le trioctyle phosphate. A titre de plastifiants esters préférentiels, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer comme triesters de glycérol préférentiels ceux qui sont constitués majoritairement (pour plus de 50 %, plus préférentiellement pour plus de 80 % en poids) d'un acide gras insaturé en C₁₈, c'est-à-dire d'un acide gras choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238 (ou US 2004/0127617), à titre d'agents plastifiants dans des bandes de roulement pour pneumatiques.

La masse moléculaire moyenne en nombre (Mn) du plastifiant liquide est préférentiellement comprise entre 400 et 25 000 g/mol, plus préférentiellement encore comprise entre 800 et 10 000 g/mol. Pour des masses Mn trop basses, il existe un risque de migration du plastifiant à l'extérieur de la composition, tandis que des masses trop élevées peuvent entraîner une rigidification excessive de cette composition. Une masse Mn comprise entre 1 000 et 4 000 g/mol s'est avérée constituer un excellent compromis pour les applications visées, en particulier pour une utilisation dans un bandage pneumatique.

La masse moléculaire moyenne en nombre (Mn) du plastifiant peut être déterminée de manière connue, notamment par SEC, l'échantillon étant préalablement solubilisé dans du tétrahydrofurane à une concentration d'environ 1 g/l ; puis la solution est filtrée sur filtre de porosité 0,45 µm avant injection. L'appareillage est la chaîne chromatographique "WATERS alliance". Le solvant d'élution est le tétrahydrofurane, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses moléculaires moyennes calculées sont relatives à une courbe d'étalonnage réalisée avec des étalons de polystyrène.

En résumé, le plastifiant liquide est préférentiellement choisi dans le groupe constitué par les élastomères liquides, les huiles polyoléfiniques, les huiles naphténiques, les huiles paraffiniques, les huiles DAE, les huiles MES, les huiles TDAE, les huiles minérales, les huiles végétales, les plastifiants éthers, les plastifiants esters, les plastifiants phosphates, les plastifiants sulfonates et les mélanges de ces composés. Plus préférentiellement, ce plastifiant liquide est choisi dans le groupe constitué par les élastomères liquides, les huiles polyoléfiniques, les huiles végétales et les mélanges de ces composés.

L'homme du métier saura, à la lumière de la description et des exemples de réalisation qui suivent, ajuster la quantité de plastifiant liquide en fonction des conditions particulières d'usage de la composition auto-obturante, notamment du bandage pneumatique dans lequel elle est destinée à être utilisée.

De préférence, le taux de plastifiant liquide est compris dans un domaine de 5 à 40 pce, plus préférentiellement dans un domaine de 10 à 30 pce. En dessous des minima indiqués, la composition élastomère risque de présenter une rigidité trop forte pour certaines applications tandis qu'au-delà des maxima préconisés, on s'expose à un risque de cohésion insuffisante de la composition et de propriétés auto-obturantes dégradées.

La composition de la couche auto-obturante a pour caractéristique essentielle d'être non chargée ou très faiblement chargée, c'est-à-dire de comporter de 0 à moins de 30 pce de charge.

Par charge, on entend ici tout type de charge, qu'elle soit renforçante (typiquement à particules nanométriques, de taille moyenne en poids préférentiellement inférieure à 500 nm, notamment entre 20 et 200 nm) ou qu'elle soit non-renforçante ou inerte (typiquement à particules micrométriques, de taille moyenne en poids supérieure à 1 µm, par exemple entre 2 et 200 µm).

Ces charges, renforçantes ou pas, sont essentiellement là que pour donner de la stabilité dimensionnelle, c'est-à-dire une tenue mécanique minimale à la composition finale. On en met de préférence d'autant moins dans la composition que la charge est connue comme renforçante vis-à-vis d'un élastomère, notamment d'un élastomère isoprénique tel que du caoutchouc naturel.

Une quantité trop élevée, notamment supérieure à 30 pce ne permet plus d'atteindre les propriétés minimales requises de souplesse, de déformabilité et d'aptitude au fluage. Pour ces raisons, la composition comporte préférentiellement 0 à moins de 20 pce, plus préférentiellement 0 à moins de 10 pce de charge.

A titre d'exemples de charges connues comme renforçantes par l'homme du métier, on citera notamment des nanoparticules de noir de carbone ou d'une charge inorganique renforçante, ou un coupage de ces deux types de charge.

Comme noirs de carbone, par exemple, conviennent tous les noirs de carbone, notamment les noirs conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme charges inorganiques renforçantes conviennent notamment des charges minérales du type silice (SiO₂), notamment les silice précipitées ou pyrogénées présentant une surface BET inférieure à 450 m²/g, de préférence de 30 à 400 m²/g.

A titre d'exemples de charges connues comme non-renforçantes ou inertes par l'homme du métier, on citera notamment des microparticules de carbonates de calcium naturels (craie) ou synthétiques, de silicates synthétiques ou naturels (tels que kaolin, talc, mica), de silices broyées, d'oxydes de titane, d'alumines ou encore d'aluminosilicates. A titre d'exemples de charges lamellaires, on peut citer également des particules de graphite. Des charges colorantes ou colorées pourront être avantageusement utilisées pour colorer la composition selon la couleur désirée.

L'état physique sous lequel se présente la charge est indifférent, que ce soit sous forme de poudre, de microperles, de granulés, de billes ou toute autre forme densifiée appropriée. Bien entendu, on entend également par charge des mélanges de différentes charges, renforçantes et/ou non renforçantes.

L'homme de l'art saura, à la lumière de la présente description, ajuster la formulation de la composition auto-obturante afin d'atteindre les niveaux de propriétés souhaités et adapter la formulation à l'application spécifique envisagée.

Selon un mode de réalisation particulier et avantageux, si une charge renforçante est présente dans la composition auto-obturante, son taux est préférentiellement inférieur à 5 pce (soit compris entre 0 et 5 pce), en particulier inférieur à 2 pce (soit compris entre 0 et 2 pce). De tels taux se sont avérés particulièrement favorables au procédé de fabrication de la composition, tout en offrant à cette dernière d'excellentes performances auto-obturantes. On utilise plus préférentiellement un taux compris entre 0,5 et 2 pce, en particulier lorsqu'il s'agit de noir de carbone.

Les constituants de base de la couche auto-obturante précédemment décrits, à savoir élastomère diénique insaturé, résine plastifiante hydrocarbonée, plastifiant liquide et charge optionnelle sont suffisants à eux seuls pour que la composition auto-obturante remplisse totalement sa fonction anti-crevaison vis-à-vis des bandages pneumatiques dans lesquels elle est utilisée.

Toutefois, divers autres additifs peuvent être ajoutés, typiquement en faible quantité (préférentiellement à des taux inférieurs à 20 pce, plus préférentiellement inférieurs à 15 pce), comme par exemple des agents anti-collante tels que des anti-UV, anti-oxydants ou anti-ozonants, divers autres stabilisants, des agents colorants avantageusement utilisables pour la coloration de la composition auto-obturante. Selon l'application visée, des fibres, sous forme de fibres courtes ou de pulpe, pourraient être éventuellement ajoutées pour donner plus de cohésion à la composition auto-obturante.

Selon un mode de réalisation préférentiel, la composition auto-obturante comporte en outre un système de réticulation de l'élastomère diénique insaturé. Ce système de réticulation est préférentiellement un système de réticulation à base de soufre, en d'autres termes un système dit "de vulcanisation".

Le système de vulcanisation à base de soufre comporte de préférence, à titre d'activateur de vulcanisation, un dérivé guanidique c'est-à-dire une guanidine substituée. Les guanidines substituées sont bien connues de l'homme du métier (voir par exemple WO 00/05300) : on citera à titre d'exemples non limitatifs la N,N'-diphénylguanidine (en abrégé "DPG"), la triphénylguanidine ou encore la di-o-tolylguanidine. On utilise de préférence la DPG.

Dans ce système de vulcanisation, pour une performance d'auto-obturation optimale, le taux de soufre est de préférence compris entre 0,1 et 1,5 pce, en particulier entre 0,2 et 1,2 pce (par exemple entre 0,2 et 1,0 pce) et le taux de dérivé guanidique est lui-même compris entre 0 et 1,5 pce, en particulier entre 0 et 1,0 pce (notamment dans un domaine de 0,2 à 0,5 pce).

Le système ne nécessite pas la présence d'un accélérateur de vulcanisation. Selon un mode de réalisation préférentiel, la composition peut donc être dépourvue d'un tel accélérateur, ou tout au plus en comporter moins de 1 pce, plus préférentiellement moins de 0,5 pce. Si un tel accélérateur est utilisé, on peut citer comme exemple tout composé (accélérateur dit primaire ou secondaire) susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Selon un autre mode de réalisation avantageux, le système de vulcanisation ci-dessus peut être dépourvu de zinc ou d'oxyde de zinc (connus comme activateurs de vulcanisation).

Selon un autre mode de réalisation possible de la couche auto-obturante, on peut aussi utiliser un donneur de soufre en lieu et place du soufre lui-même ; les donneurs de soufre sont bien connus de l'homme du métier. Typiquement, la quantité d'un tel donneur de soufre sera de préférence ajustée entre 0,5 et 10 pce, plus préférentiellement entre 1 et 5 pce, de manière à atteindre les taux de soufre équivalents préférentiels indiqués précédemment.

Après cuisson, un système de vulcanisation tel que décrit ci-dessus apporte une cohésion suffisante à la composition, sans lui conférer une vulcanisation véritable : la réticulation mesurable, via une méthode de gonflement classique connue de l'homme du métier, avoisine en fait le seuil de détection.

Outre les élastomères précédemment décrits, la composition auto-obturante pourrait aussi comporter, toujours selon une fraction pondérale minoritaire par rapport à l'élastomère diénique insaturé, des polymères autres que des élastomères, tels que par exemple des polymères thermoplastiques compatibles avec l'élastomère diénique insaturé.

La composition de la couche auto-obturante précédemment décrite peut être fabriquée par tout moyen approprié, par exemple par mélangeage et/ou malaxage dans des mélangeurs à palette ou à cylindres, jusqu'à obtention d'un mélange intime et homogène de ses différents composants.

Toutefois, le problème de fabrication suivant peut se poser : en l'absence de charge, ou tout au moins d'une quantité notable de charge, la composition est faiblement cohésive. Ce manque de cohésion peut être tel que le pouvoir collant de la composition, dû par ailleurs à la présence d'un taux relativement élevé de résine hydrocarbonée, n'est pas compensé et l'emporte ; il s'ensuit alors un risque de collage parasite sur les outils de mélangeage, qui peut être rédhibitoire dans des conditions de mise en oeuvre industrielle.

Pour pallier les problèmes ci-dessus, la composition auto-obturante, lorsqu'elle comporte un système de vulcanisation, peut être préparée selon un procédé comportant les étapes suivantes :
a) on fabrique dans un premier temps un masterbatch comportant au moins l'élastomère diénique insaturé et entre 30 et 90 pce de la résine hydrocarbonée, en mélangeant ces différents composants dans un mélangeur, à une température ou jusqu'à une température dite "température de mélangeage à chaud" ou "première température" qui est supérieure à la température de ramollissement de la résine hydrocarbonée ;
b) puis on incorpore audit masterbatch au moins le système de réticulation, en mélangeant le tout, dans le même mélangeur ou dans un mélangeur différent, à une température ou jusqu'à une température dite "seconde température" qui est maintenue inférieure à 100°C, pour l'obtention de ladite composition auto-obturante.

Les première et seconde températures ci-dessus sont bien entendues celles du masterbatch et de la composition auto-obturante, respectivement, mesurables in situ et non pas les températures de consigne des mélangeurs eux-mêmes.

Par "masterbatch" (ou "mélange-maître") doit être entendu ici, par définition, le mélange d'au moins l'élastomère diénique et de la résine hydrocarbonée, mélange précurseur de la composition auto-obturante finale, prête à l'emploi.

Le plastifiant liquide peut être incorporé à tout moment, en tout ou partie, notamment au cours de la fabrication du masterbatch lui-même (dans ce cas, avant, pendant ou après incorporation de la résine hydrocarbonée dans l'élastomère diénique), "à chaud" (c'est-à-dire à température supérieure à la température de ramollissement de la résine) comme à une température plus basse, ou par exemple après la fabrication du masterbatch (dans ce cas, avant, pendant ou après ajout du système de réticulation).

Peuvent être éventuellement incorporés à ce masterbatch divers additifs, qu'ils soient destinés au masterbatch proprement dit (par exemple un agent de stabilisation, un agent colorant ou anti-UV, un antioxydant, etc.) ou à la composition auto-obturante finale à laquelle est destiné le masterbatch.

Un tel procédé s'est avéré particulièrement bien adapté à la fabrication rapide, dans des conditions de mise en oeuvre acceptables du point de vue industriel, d'une composition auto-obturante performante, cette composition pouvant comporter des taux élevés de résine hydrocarbonée sans nécessiter notamment l'emploi d'un plastifiant liquide à un taux particulièrement élevé.

C'est au cours de l'étape a) de mélangeage à chaud que l'élastomère diénique est mis au contact de la résine hydrocarbonée pour fabrication du masterbatch. A l'état initial, c'est-à-dire avant son contact avec l'élastomère, la résine peut se présenter à l'état solide ou à l'état liquide. De préférence, pour un meilleur mélangeage, l'élastomère diénique solide est mis au contact de la résine hydrocarbonée à l'état liquide. Il suffit pour cela de chauffer la résine à une température supérieure à sa température de ramollissement. Selon le type de résine hydrocarbonée utilisée, la température de mélangeage à chaud est typiquement supérieure à 70°C, le plus souvent supérieure à 90°C, par exemple comprise entre 100°C et 150°C.

On préfère introduire, au moins en partie, le plastifiant liquide au cours de l'étape a) de fabrication du masterbatch lui-même, plus préférentiellement dans ce cas soit en même temps que la résine hydrocarbonée, soit après introduction de cette dernière. Selon un mode de réalisation particulièrement avantageux, un mélange de la résine hydrocarbonée et du plastifiant liquide pourra être préparé préalablement à l'incorporation dans l'élastomère diénique.

L'étape b) d'incorporation du système de réticulation est conduite à une température préférentiellement inférieure à 80°C, par ailleurs inférieure préférentiellement à la température de ramollissement de la résine. Ainsi, selon le type de résine hydrocarbonée utilisée, la température de mélangeage de l'étape b) est préférentiellement inférieure à 50°C, plus préférentiellement comprise entre 20°C et 40°C.

Entre les étapes a) et b) ci-dessus peut être intercalée, si nécessaire, une étape intermédiaire de refroidissement du masterbatch afin d'amener sa température à une valeur inférieure à 100°C, préférentiellement inférieure à 80°C, notamment inférieure à la température de ramollissement de la résine, ceci avant introduction (étape b)) du système de réticulation dans le masterbatch précédemment préparé.

Lorsqu'une charge telle que du noir de carbone est utilisée, elle peut être introduite au cours de l'étape a) c'est-à-dire en même temps que l'élastomère diénique insaturé et la résine hydrocarbonée, ou bien au cours de l'étape b) c'est-à-dire en même temps que le système de réticulation. On a constaté qu'une très faible proportion de noir de carbone, préférentiellement comprise entre 0,5 et 2 pce, améliorait encore le mélangeage et la fabrication de la composition, ainsi que son extrudabilité finale.

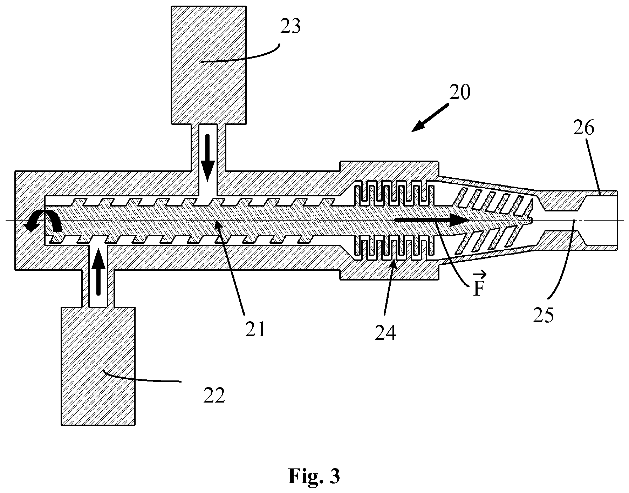

L'étape a) de fabrication du masterbatch est réalisée de préférence dans un mélangeur-extrudeur à vis tel que schématisé par exemple de manière simple à la figure 3.

On voit sur cette figure 3 un mélangeur-extrudeuse à vis 20 comportant essentiellement une vis (par exemple une mono-vis) d'extrusion 21, une première pompe de dosage 22 pour l'élastomère diénique (solide) et au moins une deuxième pompe de dosage 23 pour la résine (solide ou liquide) et le plastifiant liquide. La résine hydrocarbonée et le plastifiant liquide peuvent être introduits par exemple au moyen d'une pompe de dosage unique, s'ils ont déjà été mélangés préalablement, ou bien être introduits séparément au moyen d'une deuxième pompe et troisième pompe (troisième pompe non représentée sur la figure 3, pour simplification), respectivement. Les pompes de dosages 22, 23 permettent de monter en pression tout en conservant la maîtrise du dosage et les caractéristiques initiales des matériaux, la dissociation des fonctions de dosages (élastomère, résine et plastifiant liquide) et de mélangeage offrant en outre une meilleure maîtrise du procédé.

Les produits, poussés par la vis d'extrusion, sont intimement mélangés sous le très fort cisaillement apporté par la rotation de la vis, progressant ainsi à travers le mélangeur, par exemple jusqu'à une partie 24 dite "hacheur-homogénéisateur", zone à la sortie de laquelle le masterbatch final 25 ainsi obtenu, progressant dans le sens de la flèche F, est finalement extrudé à travers une filière 26 permettant d'extruder le produit aux dimensions souhaitées.

Le masterbatch ainsi extrudé, prêt à être utilisé, est ensuite transféré et refroidi par exemple sur un mélangeur externe à cylindres pour introduction du système de réticulation et de la charge optionnelle, la température à l'intérieur dudit mélangeur externe étant maintenue inférieure à 100°C, de préférence inférieure à 80°C, et par ailleurs étant préférentiellement inférieure à la température de ramollissement de la résine. Avantageusement, les cylindres ci-dessus sont refroidis, par exemple par circulation d'eau, à une température inférieure à 40°C, de préférence inférieure à 30°C, de manière à éviter tout collage parasite de la composition sur les parois du mélangeur.

Il est possible de mettre directement en forme le masterbatch en sortie du dispositif d'extrusion 20 pour faciliter son transport et/ou sa mise en place dans le mélangeur externe. On peut aussi utiliser une alimentation en continu du mélangeur externe à cylindres.

Grâce au dispositif spécifique et au procédé préférentiels décrits ci-dessus, il est possible de préparer la composition de la couche auto-obturante dans des conditions industrielles satisfaisantes, sans risque de pollution des outils due à un collage parasite de la composition sur les parois des mélangeurs.

La couche étanche 10 (d'épaisseur 0,7 à 0,8 mm) dans un mode de réalisation particulier est à base de caoutchouc butyl et présente une formulation conventionnelle pour une « gomme intérieure » ("inner liner") qui définit usuellement, dans un bandage pneumatique conventionnel, la face radialement intérieure du bandage destinée à protéger l'armature de carcasse de la diffusion d'air provenant de l'espace intérieur au bandage pneumatique. Cette couche 10 étanche à l'air permet donc le gonflement et le maintien sous pression du bandage pneumatique 1 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

Le bandage pneumatique de la figure 1 peut être fabriqué, comme l'indique la figure 2, en intégrant une couche auto-obturante 11 dans une ébauche non vulcanisée de bandage pneumatique 1 en utilisant un tambour de fabrication et les autres techniques usuelles dans la fabrication des bandages pneumatiques.

Plus précisément, lorsque la couche anti-collante 12 est constituée d'une couche de particules, elle peut être déposée directement à la surface de la couche auto-obturante avant son application sur un tambour de fabrication. Cette application peut se faire par gravité, par projection en suspension dans l'air, en suspension dans un liquide qui s'évapore ensuite (de l'eau par exemple). On applique ensuite sur le tambour de fabrication le stratifié constitué des deux couches auto-obturante et anti-collante, cette dernière étant mise en contact avec la périphérie du tambour de fabrication. On applique ensuite, successivement, tous les autres composants usuels du bandage pneumatique.

En faisant référence à la figure 2, la couche auto-obturante 11 au préalable préformée par toute technique connue, par exemple extrusion ou calandrage, a une épaisseur préférentiellement supérieure à 0,3 mm, plus préférentiellement comprise entre 0,5 et 10 mm (en particulier pour des bandages pneumatiques de véhicules de tourisme entre 1 et 5 mm). La couche étanche 10 est alors mise en place sur la couche auto-obturante, suivie par la nappe carcasse 7.

Dans un procédé de fabrication deux temps, l'ébauche de bandage pneumatique est alors conformée pour prendre la forme d'un tore. La couche anti-collante 12 constituée de particules de facteur de forme élevé suit les mouvements de l'ébauche de bandage pneumatique sans les perturber.

Après la conformation, les nappes sommet et la bande de roulement sont mises en place sur l'ébauche du bandage pneumatique. L'ébauche ainsi achevée est placée dans un moule de cuisson et est vulcanisée. Pendant la vulcanisation, la couche anti-collante protège la membrane de cuisson du moule de tout contact avec la couche auto-obturante.

A la sortie du moule de cuisson, les particules de la couche anti-collante 12 restent attachées à la couche auto-obturante 11. Cela permet au bandage pneumatique de se décoller sans difficulté de la membrane de cuisson.

On peut aussi appliquer les particules de la couche anti-collante juste avant la vulcanisation de l'ébauche du bandage pneumatique.

Le procédé de fabrication de l'ébauche de bandage pneumatique est alors le suivant :
- on dépose à plat une couche (« *skim* ») de la couche auto-obturante sur un tambour de fabrication ;
- on applique successivement, sur ledit tambour l'ensemble des produits usuels pour constituer une ébauche de bandage pneumatique ;
- on retire ladite ébauche dudit tambour de fabrication ;
- on applique, au moins sur la partie de la paroi intérieure de ladite ébauche non recouverte de la couche auto-obturante, un badigeon anti-collant ;
- on applique sur la paroi intérieure de la couche auto-obturante de ladite ébauche une couche anti-collante constituée de particules de facteur de forme supérieur à 5 ;
- on met en place l'ébauche de bandage pneumatique dans un moule de vulcanisation ;
- on vulcanise ladite ébauche pour obtenir un bandage pneumatique ; et
- on retire ledit bandage dudit moule de vulcanisation.

Il est avantageux d'appliquer aussi une solution anti-collante traditionnelle (badigeon : suspension de poudre ou solution anti-collante, typiquement incluant silicone ou PDMS). Cela est nécessaire dans les zones de la surface interne du pneu non recouvertes de produit auto-obturant et fait un complément anti-collant dans les zones ayant le dépôt de fibres.

L'application des particules et fibres de facteurs de forme élevés s'effectue selon les mêmes moyens.

Lorsque la couche anti-collante est noyée dans une matrice, on réalise préférentiellement d'abord un stratifié avec la couche auto-obturante que l'on applique à la surface du tambour de fabrication en une seule opération comme indiqué ci-dessus.

Le bandage pneumatique de la figure 1 peut aussi être fabriqué en utilisant un noyau rigide imposant la forme de la cavité intérieure du bandage. Dans ce procédé, on applique alors en premier la couche anti-collante sur la surface du noyau, soit en même temps que la couche auto-obturante soit successivement, puis l'ensemble des autres constituants du bandage pneumatique. L'application sur le noyau est réalisée dans l'ordre requis par l'architecture finale. Les constituants du bandage pneumatique sont disposés directement à leur place finale, sans subir de conformation à aucun moment de la confection. Cette confection peut notamment utiliser les dispositifs décrits dans le brevet EP 0 243 851 pour la pose des fils du renfort de carcasse, EP 0 248 301 pour la pose des renforts de sommet et EP 0 264 600 pour la pose des gommes caoutchouteuses. Le pneumatique peut être moulé et vulcanisé comme exposé dans le brevet US 4 895 692. La présence de la couche anti-collante permet, comme dans le cas de la membrane de cuisson, de séparer aisément le bandage pneumatique du noyau à l'issue de la phase de vulcanisation.

La couche auto-obturante 11 présentée à la figure 1 correspond au second mode de réalisation décrit précédemment. Cette couche est constituée d'une composition auto-obturante comportant les trois constituants essentiels que sont du caoutchouc naturel (100 pce), environ 50 pce de résine hydrocarbonée ("Escorez 2101" de la société Exxon Mobil - point de ramollissement égal à environ 90°C) et environ 15 pce de polybutadiène liquide ("Ricon 154" de la société Sartomer Cray Valley - Mn égale à 5200 environ) ; elle comporte en outre une très faible quantité (1 pce) de noir de carbone (N772).

La composition auto-obturante ci-dessus a été préparée à l'aide d'une extrudeuse mono-vis (L/D = 40) telle que schématisée à la figure 3 (déjà commentée précédemment) ; le mélange des trois constituants de base (NR, résine et plastifiant liquide) a été réalisé à une température (comprise entre 100 et 130°C) supérieure à la température de ramollissement de la résine. L'extrudeuse utilisée comportait deux alimentations (trémies) différentes (NR d'une part, résine et plastifiant liquide d'autre part préalablement mélangés à un température de 130 à 140°C environ) et une pompe d'injection liquide sous pression pour le mélange résine/ plastifiant liquide (injecté à une température de 100 à 110°C environ) ; quand l'élastomère, la résine et le plastifiant liquide sont ainsi intimement mélangés, on a constaté que le pouvoir collant parasite de la composition diminuait de manière très significative.

Des résultats similaires ont été obtenus en utilisant comme couche auto-obturante une composition comportant un élastomère thermoplastique styrénique TPS, telle que précédemment décrite.

L'extrudeuse ci-dessus était pourvue d'une filière permettant d'extruder le masterbatch aux dimensions voulues vers un mélangeur externe à cylindres, pour incorporation finale des autres constituants, à savoir le système de vulcanisation à base de soufre (par exemple 0,5 ou 1,2 pce) et DPG (par exemple 0,3 pce) et du noir de carbone (à un taux de 1 pce), à basse température maintenue à une valeur inférieure à +30°C (refroidissement des cylindres par circulation d'eau).

La couche auto-obturante 11, disposée donc entre la couche étanche 10 et la cavité du pneumatique, permet de procurer au pneumatique une protection efficace contre les pertes de pression dues aux perforations accidentelles, en permettant l'obturation automatique de ces perforations.

Si un corps étranger tel qu'un clou traverse la structure du bandage pneumatique, par exemple une paroi telle qu'un flanc 3 ou le sommet 2 du bandage pneumatique 1, la composition servant de couche auto-obturante subit plusieurs contraintes. En réaction à ces contraintes, et grâce à ses propriétés avantageuses de déformabilité et d'élasticité, ladite composition crée une zone de contact étanche tout autour du corps. Peu importe que le contour ou profil de ce dernier soit uniforme ou régulier, la souplesse de la composition auto-obturante permet à cette dernière de s'immiscer dans des ouvertures de taille minime. Cette interaction entre la composition auto-obturante et le corps étranger confère une étanchéité à la zone affectée par ce dernier.

En cas de retrait, accidentel ou volontaire, du corps étranger, une perforation reste : celle-ci est susceptible de créer une fuite plus ou moins importante, en fonction de sa taille. La composition auto-obturante, soumise à l'effet de la pression hydrostatique, est suffisamment souple et déformable pour obturer, en se déformant, la perforation, empêchant la fuite de gaz de gonflage. Dans le cas d'un bandage pneumatique notamment, il s'est avéré que la souplesse de la composition auto-obturante permettait de supporter sans problème les efforts des parois environnantes, même lors des phases de déformations du bandage pneumatique chargé et en roulage.

Un problème particulier peut être rencontré lors du retrait du corps étranger après un roulage plus ou moins long. Dans un tel cas, lors du roulage, le clou ou corps étranger est soumis à de fortes contraintes ce qui élargit la taille de la fissure initiale dans la paroi du bandage pneumatique. En conséquence, lorsque le retrait du corps étranger est effectif, le matériau de la couche auto-obturante, poussé par la pression de gonflage du bandage pneumatique, peut traverser toute la paroi du bandage pneumatique pour former une saillie ou bouchon à l'extérieur. Ce bouchon obture usuellement de façon satisfaisante la fuite mais il est très exposé à l'extérieur du bandage pneumatique et son arrachement est susceptible d'entraîner une mise à plat progressive ou instantanée du bandage pneumatique. Une autre conséquence de la formation d'un bouchon est de diminuer la quantité de matériau de cette couche auto-obturante à l'intérieur du bandage pneumatique, cela nuit à l'efficacité de cette couche.

Lorsqu'une couche anti-collante, tel celles précédemment décrites, est placée sur la surface de la couche auto-obturante du côté de la cavité interne du bandage pneumatique, cette couche anti-collante renforce mécaniquement la couche auto-obturante et favorise le confinement du matériau auto-obturant à l'intérieur de la paroi du bandage pneumatique. La fissure n'est alors pas entièrement traversée par le matériau de la couche auto-obturante et il n'y pas de formation de bouchon à l'extérieur. La très faible rigidité en extension de ces couches anti-collantes leur permet d'envelopper les corps étrangers perforants sans diminuer l'efficacité de la couche auto-obturante. On observe ainsi une véritable synergie entre la couche auto-obturante et la couche anti-collante comportant les particules de facteur de forme supérieure à 5.

Lors d'essais, des bandages pneumatiques de type tourisme, de dimension 205/55 R16 (marque Michelin, "Energy 3") ont été testés. Ces bandages pneumatique intègrent comme précédemment décrit une couche auto-obturante 11 recouverte par un film anti-collante comportant une couche de fibres de coton. La couche auto-obturante a une épaisseur de 3 mm.

Sur un des bandages pneumatiques monté et gonflé, huit perforations de 5 mm de diamètre ont été réalisées, à travers la bande de roulement et le bloc sommet d'une part, les flancs d'autre part, à l'aide de poinçons qui ont été immédiatement retirés.

De manière inattendue, ce bandage a résisté à un roulage sur volant à 150 km/h, sous une charge nominale de 400 kg, sans perte de pression pendant plus de 1 500 km, distance au-delà de laquelle le roulage a été stoppé.

Sur un autre bandage pneumatique, on a procédé de la même façon en laissant cette fois en place les objets perforants, pendant une semaine. Le même excellent résultat a été obtenu.

Sans composition auto-obturante et dans les mêmes conditions que ci-dessus, le bandage pneumatique ainsi perforé perd sa pression en moins d'une minute, devenant totalement inapte au roulage.

On a conduit d'autres part des tests d'endurance sur des bandages pneumatiques conformes à l'invention, identiques aux précédents, mais ayant roulé 750 km, jusqu'à une vitesse de 150 km/h, en laissant cette fois en place les poinçons dans leurs perforations. Après extraction des poinçons (ou expulsion de ces derniers suite au roulage), ces bandages pneumatiques de l'invention ont résisté au roulage sur volant sans perte de pression, dans les mêmes conditions que précédemment (distance parcourue de 1 500 km à une vitesse de 150 km/h et sous une charge nominale de 400 kg).

L'invention n'est pas limitée aux exemples décrits et représentés et diverses modifications peuvent y être apportées sans sortir de son cadre défini par les revendications annexées.

## Revendications

1. Bandage pneumatique (1) avec couche auto-obturante (11) incorporée comportant une bande de roulement caoutchouteuse (9) extérieure, un renfort de carcasse (7), une couche étanche (10) aux gaz disposée intérieurement relativement au renfort de carcasse (7), une couche anti-collante (12) disposée le plus intérieurement et une couche auto-obturante (11) adjacente à la couche anti-collante (12) et disposée intérieurement relativement à la couche étanche (10) aux gaz, **caractérisé en ce que** ladite couche anti-collante (12) est constituée de particules de facteur de forme F=L/E supérieur à 5, L représentant la longueur ou plus grande dimension et E la plus petite dimension normale à la longueur.

2. Bandage pneumatique selon la revendication 1, dans lequel les particules sont des fibres courtes de diamètre compris entre 10 et 200 microns et de longueur comprise entre 1 et 5 mm.

3. Bandage pneumatique selon la revendication 2, dans lequel les fibres sont choisies dans le groupe des fibres de coton, des fibres d'aramide, les fibres de verre et leurs mélanges.

4. Bandage pneumatique selon la revendication 1, dans lequel les particules sont des charges lamellaires.

5. Bandage pneumatique selon la revendication 4, dans lequel les charges lamellaires sont choisies dans le groupe constitué par les graphites, les phyllosilicates et les mélanges de telles charges.

6. Bandage pneumatique selon la revendication 5, dans lequel les charges lamellaires sont choisies dans le groupe constitué par les graphites, les talcs, les micas et les mélanges de telles charges.

7. Bandage pneumatique selon l'une quelconque des revendications précédentes, dans lequel l'épaisseur de la couche anti-collante (12) est inférieure à 500 µm.

8. Bandage pneumatique selon la revendication 7, dans lequel l'épaisseur de la couche anti-collante (12) est inférieure à 100 µm.

9. Bandage pneumatique selon la revendication 8, dans lequel l'épaisseur de la couche anti-collante (12) est comprise entre 30 et 50 µm.

10. Bandage pneumatique selon l'une quelconque des revendications 1 à 9, dans lequel la couche auto-obturante (11) comporte au moins, pce signifiant parties en poids pour cent parties d'élastomère, un élastomère thermoplastique styrénique, dit « TPS », et plus de 200 pce d'une huile d'extension dudit élastomère.

11. Bandage pneumatique selon la revendication 10, dans lequel le TPS est l'élastomère majoritaire de la couche auto-obturante (11).

12. Bandage pneumatique selon l'une quelconque des revendications 1 à 9, dans lequel la couche auto-obturante (11) comporte au moins, pce signifiant parties en poids pour cent parties d'élastomère solide :
(a) à titre d'élastomère majoritaire, un élastomère diénique insaturé ;
(b) entre 30 et 90 pce d'une résine hydrocarbonée ;
(c) 0 à moins de 30 pce d'une charge.

13. Procédé pour protéger un bandage pneumatique (1) vis-à-vis des crevaisons, dans lequel on incorpore audit bandage pneumatique (1) lors de sa fabrication une couche auto-obturante (11), **caractérisé en ce qu'**on dispose sur la surface radialement interne de ladite couche auto-obturante (11) une couche anti-collante (12) constituée de particules de facteur de forme supérieur à 5.

14. Procédé selon la revendication 13, dans lequel, avant de déposer à plat ladite couche auto-obturante (11) sur un tambour de fabrication, on dépose sur ladite couche auto-obturante (11) des particules de facteur de forme, F=L/E, supérieur à 5 pour constituer un stratifié.

## Patentansprüche

1. Reifen (1) mit integrierter selbstdichtender Schicht (11), welcher einen äußeren Kautschuklaufstreifen (9), eine Karkassenverstärkung (7), eine bezüglich der Karkassenverstärkung (7) innen angeordnete gasdichte Schicht (10), eine am weitesten innen angeordnete Antiklebeschicht (12) und eine selbstdichtende Schicht (11), die der Antiklebeschicht (12) benachbart ist und bezüglich der gasdichten Schicht (10) innen angeordnet ist, umfasst, **dadurch gekennzeichnet, dass** die Antiklebeschicht (12) aus Partikeln mit einem Formfaktor F = L/E, der größer als 5 ist, besteht, wobei L die Länge oder größte Abmessung und E die zur Länge senkrechte kleinste Abmessung darstellt.

2. Reifen nach Anspruch 1, wobei die Partikel kurze Fasern mit einem Durchmesser zwischen 10 und 200 Mikrometern und einer Länge zwischen 1 und 5 mm sind.

3. Reifen nach Anspruch 2, wobei die Fasern aus der Gruppe der Baumwollfasern, der Aramidfasern, der Glasfasern und ihrer Mischungen ausgewählt sind.

4. Reifen nach Anspruch 1, wobei die Partikel lamellare Füllstoffe sind.

5. Reifen nach Anspruch 4, wobei die lamellaren Füllstoffe aus der Gruppe ausgewählt sind, die aus den Graphiten, den Phyllosilikaten und den Mischungen derartiger Füllstoffe besteht.

6. Reifen nach Anspruch 5, wobei die lamellaren Füllstoffe aus der Gruppe ausgewählt sind, die aus den Graphiten, den Talken, den Glimmern und den Mischungen derartiger Füllstoffe besteht.

7. Reifen nach einem der vorhergehenden Ansprüche, wobei die Dicke der Antiklebeschicht (12) kleiner als 500 µm ist.

8. Reifen nach Anspruch 7, wobei die Dicke der Antiklebeschicht (12) kleiner als 100 µm ist.

9. Reifen nach Anspruch 8, wobei die Dicke der Antiklebeschicht (12) zwischen 30 und 50 µm liegt.

10. Reifen nach einem der Ansprüche 1 bis 9, wobei die selbstdichtende Schicht (11) wenigstens ein thermoplastisches Styrol-Elastomer, "TPS" genannt, und über 200 pce eines Verlängerungsöls dieses Elastomers umfasst, wobei pce "Gewichtsteile pro hundert Teile Elastomer" bedeutet.

11. Reifen nach Anspruch 10, wobei das TPS das überwiegende Elastomer der selbstdichtenden Schicht (11) ist.

12. Reifen nach einem der Ansprüche 1 bis 9, wobei die selbstdichtende Schicht (11) wenigstens umfasst, wobei pce "Gewichtsteile pro hundert Teile festes Elastomer" bedeutet:
(a) als überwiegendes Elastomer ein ungesättigtes Dienelastomer;
(b) zwischen 30 und 90 pce eines Kohlenwasserstoffharzes;
(c) 0 bis weniger als 30 pce eines Füllstoffs.

13. Verfahren zum Schützen eines Reifens (1) vor Reifenpannen, wobei in den Reifen (1) bei seiner Herstellung eine selbstdichtende Schicht (11) integriert wird, **dadurch gekennzeichnet, dass** auf der radial inneren Fläche der selbstdichtenden Schicht (11) eine Antiklebeschicht (12) angeordnet wird, die aus Partikeln mit einem Formfaktor besteht, der größer als 5 ist.

14. Verfahren nach Anspruch 13, wobei vor dem flachen Auflegen der selbstdichtenden Schicht (11) auf eine Aufbautrommel auf die selbstdichtende Schicht (11) Partikel mit einem Formfaktor F = L/E, der größer als 5 ist, aufgebracht werden, um ein Laminat zu bilden.

## Claims

1. Tyre (1) with inbuilt self-sealing layer (11) comprising an external rubber tread (9), a carcass reinforce (7), a gastight layer (10) arranged on the inside relative to the carcass reinforce (7), an anti-tack layer (12) arranged furthest towards the inside and a self-sealing layer (11) adjacent to the anti-tack layer (12) and arranged on the inside relative to the gastight layer (10), **characterized in that** the said anti-tack layer (12) comprises particles with a shape factor F=L/E higher than 5, L representing the length or longest dimension and E the shortest dimension normal to the length.

2. Tyre according to Claim 1, in which the particles are short fibres with diameters of between 10 and 200 microns and lengths of between 1 and 5 mm.

3. Tyre according to Claim 2, in which the fibres are selected from the group of cotton fibres, aramid fibres, glass fibres and mixtures thereof.

4. Tyre according to Claim 1, in which the particles are lamellar fillers.

5. Tyre according to Claim 4, in which the lamellar fillers are selected from the group consisting of graphites, phyllosilicates and mixtures of such fillers.

6. Tyre according to Claim 5, in which the lamellar fillers are selected from the group consisting of graphites, talcs, micas and mixtures of such fillers.

7. Tyre according to any one of the preceding claims, in which the thickness of the anti-tack layer (12) is less than 500 µm.

8. Tyre according to Claim 7, in which the thickness of the anti-tack layer (12) is less than 100 µm.

9. Tyre according to Claim 8, in which the thickness of the anti-tack layer (12) is between 30 and 50 µm.

10. Tyre according to any one of Claims 1 to 9, in which the self-sealing layer (11) comprises at least, where phr means parts by weight per hundred parts of rubber, a thermoplastic styrene, or "TPS" elastomer and over 200 phr of an extension oil used to extend the said elastomer.

11. Tyre according to Claim 10, in which the TPS is the predominant elastomer in the self-sealing layer (11).

12. Tyre according to any one of Claims 1 to 9, in which the self-sealing layer (11) comprises at least, where phr means parts by weight per hundred parts of solid rubber:
(a) by way of predominant elastomer, an unsaturated diene elastomer;
(b) between 30 and 90 phr of a hydrocarbon resin;
(c) 0 to under 30 phr of a filler.

13. Method for protecting a tyre (1) against punctures, in which a self-sealing layer (11) is built into the said tyre (1) at the time of its manufacture, **characterized in that** an anti-tack layer (11) comprising particles of shape factor higher than 5 is applied to the radially internal surface of the said self-sealing layer.

14. Method according to Claim 13, in which, before laying the said self-sealing layer out flat on a tyre-building drum, particles of shape factor F=L/E higher than 5 are applied to the said self-sealing layer to form a laminate.
